# EUROPÄISCHE PATENTSCHRIFT

(11) **EP 1 847 729 B1**
(45) Veröffentlichungstag und Bekanntmachung des Hinweises auf die Patenterteilung: **16.06.2010**
(21) Anmeldenummer: 07007486.9
(22) Anmeldetag: 12.04.2007
(51) Int. Cl.: F16H 19/00, F16H 25/20, F16H 25/24

(54) **Ausfahrbare Säule**
Extendable column
Colonne extensible

(30) Priorität: 19.04.2006 DE 102006018965
(43) Veröffentlichungstag der Anmeldung: 24.10.2007
(73) Patentinhaber: Neff, Karl, 74080 Heilbronn (DE)
(72) Erfinder: Neff, Karl, 74080 Heilbronn (DE)
(74) Vertreter: Patentanwälte Ruff, Wilhelm, Beier, Dauster & Partner

(56) Entgegenhaltungen:
- WO-A-88/08620
- DE-A1- 3 501 454
- DE-C1- 3 419 477
- DE-U1- 20 101 388
- US-A- 4 225 871

## Beschreibung

Die Erfindung betrifft eine ausfahrbare Säule mit einem Sockel, einem aus dem Sockel ausfahrbaren Säulenschaft, einem Kopf und einem Antrieb. Derartige ausfahrbare Säulen, die je nach ihrer Art und Verwendung auch Linearantriebe, Spindeln, Stempel odgl. genannt werden, dienen normalerweise dazu, Gegenstände, Baugruppen oder Maschinenteile verfahrbar, insbesondere höhenverstellbar, zu tragen oder zu bewegen. Im Falle von mechanischen Spindeln, beispielsweise Schraubspindeln oder Zahnstangen, ebenso wie bei hydraulischen Stempeln oder Zylindereinheiten, besteht ein Problem darin, dass die Einheit auch in ganz eingefahrenem Zustand einen großen Platzbedarf hat, der als Totraum meist mehr als die Hälfte der ausgefahrenen Gesamtlänge ausmacht. Dies kann zwar mit mehrfach teleskopischen Einheiten verringert werden, erfordert jedoch einen großen Aufwand.

Es sind sogenannte Schubkettenantriebe bekannt geworden, die aus einzelnen Kettengliedern bestehen, die sich einander versteifend zu einer Stange zusammenfügen. Diese Antriebe sind allerdings nicht zugfest und nicht völlig sicher gegen Ausknicken.

Es sind Stahlbänder bekannt, die im gestreckten Zustand bombiert, d.h. in Querrichtung gewölbt sind und sich beim Ausknicken selbsttätig aufrollen, wobei sie dann als gerader, unbombierter Wickel vorliegen. Derartige Stahlbänder sind beispielsweise als Rollbandmaße bekannt. Es sind auch schon Getriebe damit vorgeschlagen worden, z.B. in der EP 363 939 B1 und der deutschen Patentschrift DE 38 38 724 C2. Sie haben sich in der Praxis, zum Teil aus Verschleißgründen, nicht durchgesetzt.

Aus Dokument US 4225871 ist eine Ausfahrbare Säule mit den Merkmalen des Oberbegriffs des unabhängigen Anspruch 1 bekannt.

### Aufgabe und Lösung

Aufgabe der Erfindung ist es, eine ausfahrbare Säule zu schaffen, die im eingefahrenen Zustand nur geringe axiale Abmessungen benötigt.

Gelöst wird diese Aufgabe durch eine Säule mit den Merkmalen des Anspruchs 1. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht.

Erfindungsgemäß weist der Säulenschaft mehrere über den Umfang des Säulenschaftes verteilte flexible, im Säulenbereich bombierte Bänder auf. Die Bänder können sich im Bereich des Sockels selbst aufrollen bzw. aufgerollt werden und nehmen so wenig axialen Raum ein. Die aufgerollten Bandwickel liegen dann im Sockelbereich außen neben dem Sockel und nehmen keinen axialen Platz ein. Es wäre aber auch möglich, durch radial vom Sockel ausgehende Führungen die Bänder gerade zu führen, wobei sie noch weniger Höhe, dafür aber eine größere Breite einnehmen würden.

Die Bänder können durch Führungen im Sockel so geführt werden, dass sie von ihrer äußeren aufgerollten Lage in die im wesentlichen geradlinige, parallel zur Säulenachse verlaufende Lage überführt werden, in der sie selbstversteifend bombiert sind. Dabei weist die Bombierung nach außen, so dass sich aus den zahlreichen, beispielsweise sechs um den Säulenschaft herum angeordneten Bändern ein nahezu kreisförmiger Säulenschaftquerschnitt ergibt.

Die Bänder sind im Säulenschaftbereich durch Zwischenelemente miteinander verbunden, in die sie mit ihren Randbereichen eingreifen. Diese Zwischenelemente können beispielsweise aus einzelnen Gliedern bestehen, die einen druck- und vorzugsweise auch zugfesten, jedoch zumindest in einer Richtung flexiblen kettenartigen Strang bilden. Die einzelnen Glieder können also auf beiden Seiten Nuten oder Schlitze haben, in die die Ränder der Bänder eingreifen. Besonders bevorzugt ist eine Ausführung, in der die Glieder innen zahnartige Vorsprünge aufweisen, die von einem Antriebsgetriebe, beispielsweise einer zur Säule konzentrischen Schnecke oder Schraube, in Richtung der Säulenachse angetrieben werden. Dieser Strang aus den Gliedern hat also eine mehrfache Aufgabe, nämlich einerseits eine druckfeste Verbindung herzustellen und somit die eigentliche Tragfunktion der Säule zu gewährleisten, andererseits die Bänder, die für die Versteifung gegen Ausknicken zuständig sind, miteinander zu verbinden und zu führen und den Antrieb zu ermöglichen. Der flexible Strang kann ebenfalls im Sockel durch Führungen nach außen abgelenkt werden, so dass er auch keine zusätzliche Höhe benötigt. Die Säule kann dadurch zugfest gemacht werden, dass die einzelnen Glieder des Stranges, z.B. durch innen laufende Stahldrahtseile, miteinander zu einem zugfesten Strang zusammengefügt sind.

Es ergibt sich somit eine ausfahrbare Säule, die als Linearantrieb, als Tragelement oder dgl. verwendet werden kann. Bei einer Minimalhöhe, die fast auf die Höhe des Sockels beschränkt ist, von nur wenigen Zentimetern, kann diese Säule eine ausgefahrene Höhe von mehr als dem Zehnfachen der Minimalhöhe haben. Theoretisch ist die maximale Ausfahrhöhe bzw. -länge unbegrenzt, solange die statischen Voraussetzungen gegeben sind. Es wird somit ein ideales Bauelement für Hebebühnen etc. geschaffen, ohne es Anforderungen an einen Unterbau stellt. Der Antrieb kann beispielsweise über einen Getriebemotor nach Art eines LKW-Scheibenwischenmotors, jedoch auch über einen Zahnriemenantrieb erfolgen, wobei der Motor seitlich vom Sockel angeordnet sein kann und somit die Bauhöhe nicht beeinträchtigt.

Im Rahmen der Erfindung sind zahlreiche Abwandlungen von der beschriebenen bevorzugten Ausführung möglich. So könnte statt eines den Innenraum der Säule füllenden Schrauben- bzw. Schneckenantriebs auch ein Antrieb über Ritzel erfolgen, die innen in Sternform angeordnet sind. Es ist auch nicht zwingend notwendig, sämtliche Zwischenelemente als Antriebselemente auszubilden. Es könnten also einige, beispielsweise zwei gegenüber liegende Elemente, mit Antriebsritzeln zusammenwirken, während die übrigen Zwischenelemente nur zur Verbindung der Bänder ausgebildet sind. Auch ein Eingriff des Antriebs von außen, z.B. im Sockelbereich durch Ritzel, ist möglich. Ferner wäre es denkbar, den Antrieb nicht über Zwischenelemente, sondern direkt über die Bänder vorzunehmen, indem diese entsprechende Angriffselemente erhalten, beispielsweise eine Längsperforation, in die Antriebsritzel eingreifen. Die Zwischenelemente erhöhen durch ihre die Bänder verbindende Wirkung die Steifigkeit der sich bildenden Säule. Allerdings haben die Bänder auch schon eine große Eigensteifigkeit, so dass es auch möglich wäre, die Zwischenelemente ganz weg zu lassen und die Säule ausschließlich aus den bombierten Bändern zu bilden.

Es ist auch möglich, die Säule mit einem nur in eine Richtung aktiv verstellbaren Antrieb auszustatten. So könnte beispielsweise durch eine innen liegende vorgespannte Schraubenfeder die Säule in Ausfahrrichtung belastet sein, während die Verstellung über ein flexibles Zugelement wie Seil, Kette, Band odgl., von einem Antrieb her vorgenommen wird.

Nach dem bevorzugten Ausführungsbeispiel besitzt also eine selbstaufbauende Säule, die als Linearantrieb, Hubstempel oder dgl. nutzbar ist, einen Sockel und einen Kopf. Der dazwischen liegende, ausfahrbare Säulenschaft setzt sich aus um den Umfang des Säulenschafts herum verteilten flexiblen, im Säulenbereich bombierten Stahlbändern zusammen, die sich außerhalb dieses gestreckten Bereiches, d.h. neben dem Sockel selbsttätig aufrollen. Zwischen die Bänder ist ein aus einzelnen Gliedern bestehender Strang zwischengeschaltet, der die Ränder der Bänder im Bereich des Säulenschaftes aufnimmt, die Bänder miteinander verbindet und gleichzeitig für den Linearantrieb sorgt, indem an dem Strang vorgesehene Zahnungen mit einer konzentrisch in der Säule gelagerten Schraube nach Art eines Gewindes zusammenwirken. Es entsteht somit eine Säule, die sich selbst zusammenfügt und fast keinen Totraum benötigt.

Die vorstehenden und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischenüberschriften beschränkt die unter diesen gemachten Aussagen nicht in ihrer Allgemeingültigkeit.

### Kurzbeschreibung der Zeichnungen

Ein Ausführungsbeispiel der Erfindung ist in der Zeichnung schematisch dargestellt und wird im Folgenden näher erläutert. Es zeigen:

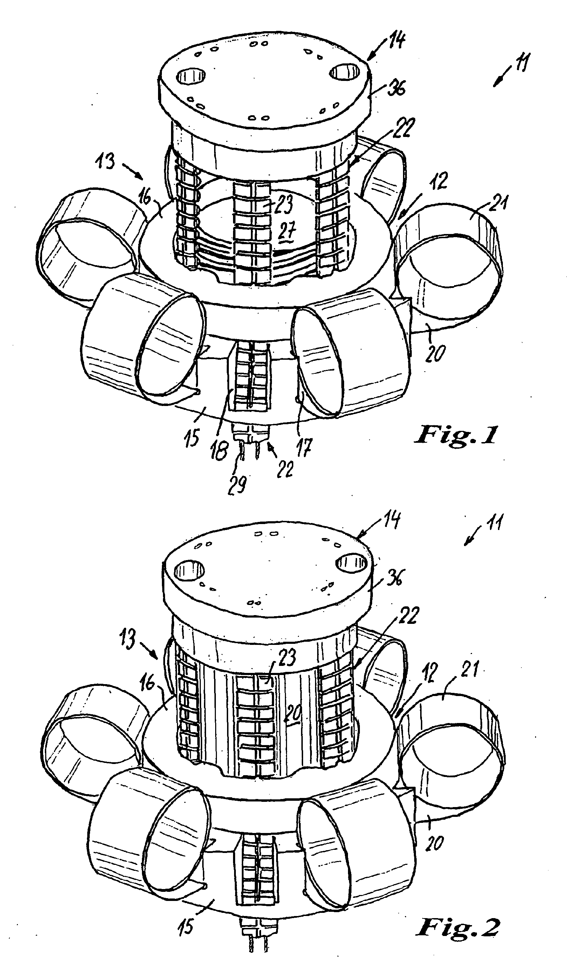

- Figur 1: eine ausfahrbare Säule in perspektivischer Ansicht, jedoch ohne Bänder im Bereich des Säulenschaftes, um die innenliegende Antriebsschraube zu zeigen,
- Figur 2: die Ansicht nach Fig. 1 mit den Bändern,
- Figur 3: einen vertikalen Teilschnitt durch die ausfahrbare Säule,
- Figur 4: einen Schnitt nach der Linie IV-IV in Fig. 3 und die
- Figuren 5 bis 7: drei verschiedene Ansichten eines Gliedes der Zwischenelemente.

### Detaillierte Beschreibung des Ausführungsbeispiels

Die Zeichnungen zeigen eine ausfahrbare Säule 11, die als ein Linearantrieb, eine längenverstellbare Tragsäule oder dgl. verwendbar ist. Sie besitzt einen Sockel 12, der z.B. auf einem Boden- oder Maschinenteil abgestützt sein kann, einen aus dem Sockel ausfahrbaren und damit längenveränderlichen Säulenschaft 13 und einen den Säulenschaft begrenzenden Säulenkopf 14.

Der Sockel ist in seiner Grundform kreisförmig mit einem Basisabschnitt 15 und einem den unteren Teil des Säulenschaftes 13 umgebenden Kragen 16. In dem Basisabschnitt 15 sind Führungen 17, 18 vorgesehen, die vom Säulenschaft aus kurvig oder schräg nach außen führen. In der Führung 17 ist ein bombiertes Band 20 geführt, das außerhalb des Sockels sich als Rolle 21 selbsttätig aufrollt. Insgesamt sind im dargestellten Beispiel sechs solcher Bänder am Umfang vorhanden.

Die Bänder bestehen aus einem hochfesten flexiblen Material, beispielsweise Federstahl, das durch eine Bombierung so unter Spannung versetzt wird, dass es in gestrecktem Zustand eine Bombierung oder Wölbung quer zur Längsrichtung des Bandes erhält, die das Band im gestrecktem Zustand versteift und damit die Übertragung recht erheblicher Druckkräfte ohne Ausknicken ermöglicht. Wenn es jedoch, z.B. durch partielles Eindrücken der Bombierung, geknickt wird, rollt es sich automatisch zu der Rolle 21 auf. Solche Bänder sind z.B. von der Firma COBRA Bandstahl GmbH, Wächtersbach, zu beziehen.

Die insgesamt sechs Bänder sind mit ihren Enden am Kopf 14 befestigt, so dass sie, mit ihrer Bombierung jeweils nach außen weisend, gleichmäßig um den Umfang des Säulenschaftes 13 angeordnet sind und laufen dann vom Säulenschaft in die Führung 17 des Sockels hinein, wo sie innerhalb der Führung eine reversible Knickung erfahren, so dass sie dann aus der Führung 17 am Umfang des Sockels herauslaufen und dort die Rolle oder den Wickel 21 bilden.

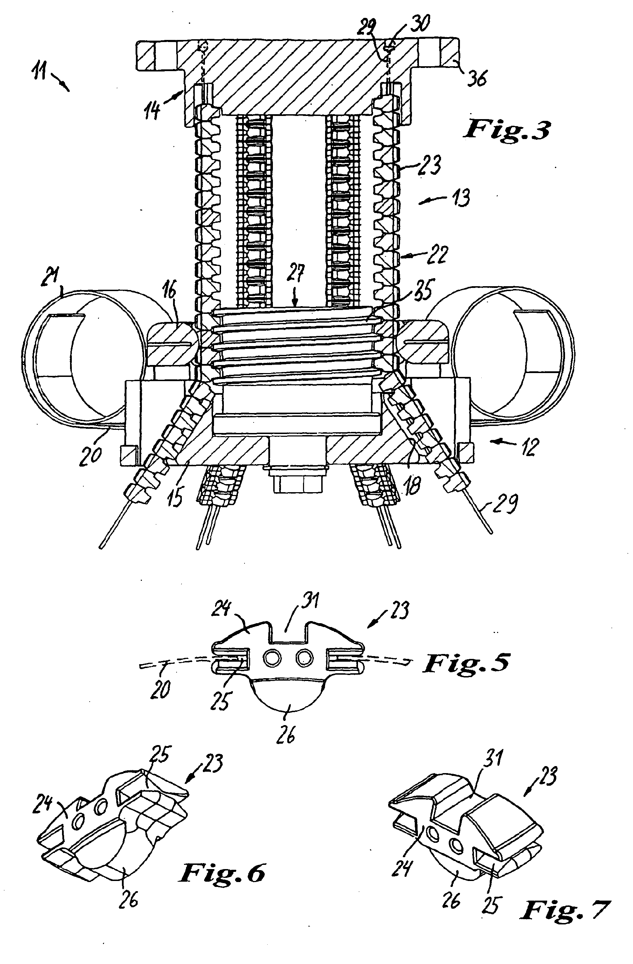

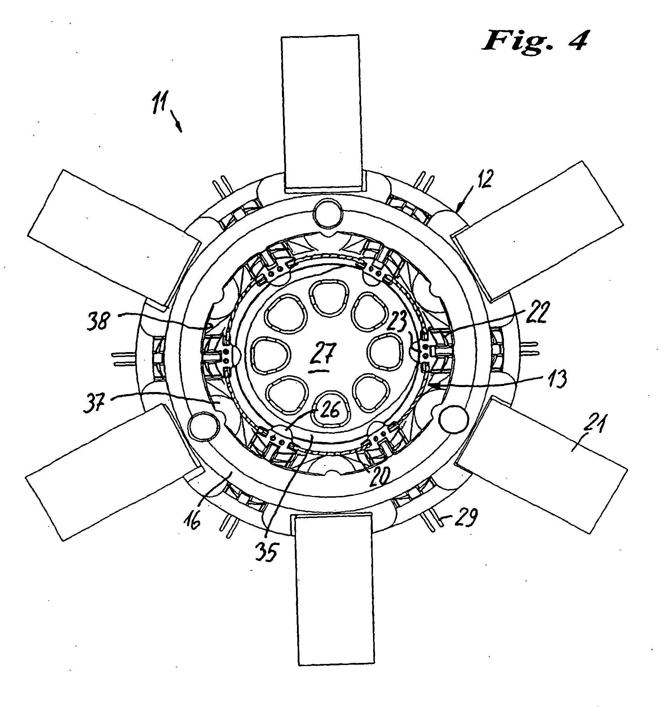

Zwischen den Bändern 20 ist, wie die Fig. 4 zeigt, jeweils eine Lücke vorgesehen, in der Zwischenelemente 22 angeordnet sind. Die Zwischenelemente 22 bestehen aus einem Strang aus einzelnen Gliedern, die in den Figuren 5 und 6 im Detail dargestellt sind. Die aus Metall oder Kunststoff bestehenden Gliedern 23 haben auf beiden Seiten jeweils eine Fläche 24, mit der sie sich aneinander abstützen. Diese Fläche kann leicht gewölbt sein, um ein Abrollen beim Biegen des Stranges zu ermöglichen. An beiden Seiten sind Schlitze oder Nuten 25 mit Einführschrägen vorgesehen, in die die Seitenränder der Bänder 20 eingreifen können (in Fig. 5 strichliert angedeutet). Zur Innenseite des Säulenschaftes 13 weisend, sind Antriebselemente 26 vorgesehen, die nach Art von Zähnen nach innen vorstehen und soviel schmaler sind als die Abmessung des Gliedes in Richtung der Säulenachse 27, dass dazwischen Gewindegänge mit Flanken 35 einer zentralen Schraube oder Schnecke 27, die ein Antriebselement für die Ausfahrbewegung bildet, eingreifen können. Dieser Antriebseingriff geschieht in dem vom Kragen 16 umgebenen Bereich, so dass sich die Zwischenelemente 22 daran abstützen können.

Die Glieder 23 besitzen ferner im dargestellten Beispiel zwei Öffnungen 28, die eine Aufreihung der Glieder zu einem geschlossenen, das Zwischenelement bildenden Strang 22 mittels im Beispiel zweier verspannter Drahtseilen 29 ermöglicht. Diese sind im Kopf, beispielsweise durch ein verdicktes Ende 30, festgelegt und am anderen Ende des Stranges verspannt. An der nach außen weisenden Seite des Gliedes ist ebenfalls eine Nut 31 vorgesehen, die zur Führung und Andrückung der flexiblen Zwischenelemente durch eine Bügelfeder 32 im Bereich der Führungen 18 dient.

Die Glieder bilden also einen druck- und zugfest geschlossenen Strang, der jedoch so weit flexibel ist, dass er im Bereich der Führung 18 nach außen abgelenkt und schließlich auch ganz in eine zur Säulenachse 27 radiale Richtung umgelenkt werden kann. Die Führung 18 ist so ausgebildet, dass sie den Strang einerseits in das Gewinde der Schraube 27 einführt, während andererseits die Ränder der Bänder 20 seitlich in die Nuten 25 einlaufen. Dies wird möglich, weil durch die jeweils etwa radiale Zusammenführung der Zwischenelemente-Stränge 22 und der Bänder 20 ein die Einführung ermöglichender Winkel gebildet wird.

Die das Antriebselement bildende Schraube 27 hat einen Durchmesser, der dem Säulenschaft-Innendurchmesser entspricht. Sie ist in einer zentralen Vertiefung des Sockels um die Säulenachse 27 drehbar gelagert und wird von einem angedeuteten Motor 33 drehbar angetrieben.

### Funktion

Wenn die Säule eingefahren, d.h. auf geringst mögliche axiale Höhe gefahren ist, liegt der Kopf 14 auf dem Sockel 12 auf. Die Bänder 20 sind weitestmöglich aufgerollt und die Zwischenelemente 22 können gegenüber der in Fig. 3 dargestellten Lage noch weiter in die Horizontale geführt sein. Es ist auch möglich, für sie einen seitlichen, radial vom Sockel hinwegführenden Ausgang zu schaffen, beispielsweise durch einen zusätzlichen Knick oder eine Rundung in der Führung 18.

Um die Säule auszufahren, wird die Schraube 27 vom Motor 23, ggf. über ein Getriebe, gedreht, so dass die Gewindeflanken 35 mit den Vorsprüngen 26 in Eingriff kommen und den Zwischenelementestrang nach oben verschieben. Dieser kann nicht ausknicken, da seine Nuten 25 mit den Bändern 20 im Eingriff stehen. Die Schraube oder Schnecke 27 arbeitet also mit den insgesamt sechs Zwischenelementen am Umfang wie Schraube und Mutter zusammen. Dieser Antrieb ist normalerweise auch selbsthemmend, so dass für die Tragfunktion der Säule keine Antriebsbremse notwendig ist.

Bei dem Aufwärtsfahren fädeln sich die durch die Führungen 17 nachgezogenen Bänder 20 in die Nuten 25 der Zwischenelementeglieder 23 ein, so dass sich ein geschlossener zusammenhängender Säulenschaft bildet. Dieser ist im dargestellten Beispiel kreisrund und besteht aus sechs Bändern und sechs Zwischenelementen. Es ist jedoch auch möglich, andere Säulenformen zu erzeugen, wobei zwar die durch die Bombierung der Bänder vorgegebene Krümmung auch als Segment für den Säulenschaftquerschnitt vorteilhaft ist. Es können aber auch davon abweichende Formen, ggf. sogar mit nach innen bombierten Bändern und dementsprechend innen laufenden Rollen erzeugt werden.

Bei Aufwärtssteigen des Säulenschaftes wird jeweils durch die Führung 17 im Sockel das Band gestreckt und nimmt dadurch seine bombierte Form ein. Nach innen gerichtete gewölbte Vorsprünge 37 in der Ausnehmung 38 des Sockels führen das Band mit einer Linienberührung. Die Spannung des Zwischenelementstranges 22 durch die Zugelemente (jeweils zwei Drahtseile 29 je Strang) schafft einen zugfesten und in Querrichtung relativ knickfesten Strang, jedoch ohne die Flexibilität in der aus den Zeichnungen hervorgehenden Richtung zu behindern.

Am Kopf 14 ist ein Flansch 36 vorgesehen, über den die mit der Säule bewegten und getragenen Baugruppen angeschlossen werden können.

Beim Einziehen der Säule wird die Schraube in der entsprechend anderen Richtung gedreht, zieht die Zwischenelementstränge 22 gleichmäßig nach unten, was durch die zugfeste Verbindung nicht präzise möglich ist. Die Bänder rollen sich selbsttätig wieder auf und die Zwischenelementstränge 22 werden seitlich herausgeschoben. Dabei wird das Eindrücken der Bombierung des Bandes 20 zum Aufwickeln von den Vorsprüngen 37 unterstützt.

Es wird damit eine selbstaufbauende Säule oder Spindel geschaffen, die sich aus einzelnen Strängen und Bändern selbsttätig bei entsprechendem Antrieb zusammensetzt. Bei einer Ausführung ermöglicht ein nur sechs Zentimeter hoher Sockel eine Säulenhöhe von einem Meter.

Es ist möglich, die Zwischenelementstränge statt aus einzelnen Elementen auch als ein zusammenhängendes Band herzustellen, bei dem z.B. über Filmscharniere die einzelnen Glieder miteinander verbunden sind, was für niedrige Beanspruchung ausreichen kann. Eine Ausführung mit Metallgliedern 23, die sich z.B. über die in den Fig. 5 bis 7 gezeigten Einführschrägen gut in die Bandränder einfügen lassen, hält stärksten Axialkräften Stand, ohne dass Ausknickung zu befürchten ist. Die Bänder bestehen vorzugsweise aus hochfestem Federstahl und sind nur wenige Zehntel Millimeter dick. Sie könnten aber bei bestimmten Anforderungen auch aus anderen Materialien bestehen, die die entsprechende Festigkeit und einen Elastizitätsmodul aufweisen, beispielsweise aus kohlenstofffaserverstärktem Kunststoff.

## Patentansprüche

1. Ausfahrbare Säule (11) mit einem Sockel (12), einem aus dem Sockel ausfahrbaren Säulenschaft (13), einem Kopf (14) und einem Antrieb (27, 33), wobei der Säufenschaft (13) mehrere flexible, im Säulenbereich bombierte Bänder (20) aufweist, **dadurch gekennzeichnet, dass** die bombierte Bänder (20) über den Umfang des Säulenschafts verteilt sind.

2. Säule nach Anspruch 1, **dadurch gekennzeichnet, dass** die Bänder (20) im Bereich des Sockels (12) aufrollbar, vorzugsweise selbstaufrollend, sind.

3. Säule nach Anspruch 1 oder 2, **dadurch gekennzeichnet, dass** die Bänder (20) durch Führungen (17) den Sockel (12) zwischen einer äußeren aufgerollten Lage und einer im wesentlichen geradlinigen, parallel zur Säulenachse (27) verlaufenden Lage geführt sind, in der sie selbst versteifend bombiert sind.

4. Säule nach einem der vorhergehenden Ansprüche, **dadurch gekennzeichnet, dass** die Bänder bombierte Federstahlbänder sind.

5. Säule nach einem der vorhergehenden Ansprüche, **dadurch gekennzeichnet, dass** im Säulenschaftbereich (13) zwischen die Bänder (20) Zwischenelemente (22) eingefügt sind, die die Bänder (20) in ihren Randbereichen miteinander verbinden.

6. Säule nach Anspruch 5, **dadurch gekennzeichnet, dass** die Zwischenelemente (22) Glieder beinhalten, die einen druck- und vorzugsweise auch zugfesten, jedoch zumindest in einer Richtung flexiblen kettenartigen Strang bilden.

7. Säule nach Anspruch 6, **dadurch gekennzeichnet, dass** die Zwischenelemente (22) Antriebselemente (26), wie zahnartige Vorsprünge, an den Gliedern (23) aufweisen, die von einem Antriebsgetriebe (27), wie einer zur Säule konzentrischen Schraube oder Schnecke, zu einem Längstransport in Richtung der Säulenachse (27) angetrieben werden.

8. Säule nach Anspruch 6 oder 7, **dadurch gekennzeichnet, dass** die Glieder (23) seitliche Aufnahmen (25) für die Außenränder der Bänder (20) haben, in die die Bänder (20) im Bereich des Sockels (10) eingreifen.

9. Säule nach einem der Ansprüche 5 bis 8, **dadurch gekennzeichnet, dass** die flexiblen Zwischenelemente (22) in einer Führung (18) des Sockels (12) nach außen umlenkbar sind.

10. Säule nach einem der Ansprüche 6 bis 9, **dadurch gekennzeichnet, dass** die Zwischenelemente (22) durch Zugelemente (29), wie flexible Drahtseile, die durch Öffnungen (28) in den Gliedern (28) gespannt sind, zugfest verbunden sind.

11. Säule nach einem der Ansprüche 5 bis 10, **dadurch gekennzeichnet, dass** im Bereich der Führungen (18) für die Zwischenelemente (22) Andruckelemente (32) die Zwischenelemente (22) nach innen andrücken.

12. Säule nach einem der Ansprüche 5 bis 11, **dadurch gekennzeichnet, dass** der Sockel (12) abwechselnd Führungen (17) für die Bänder (20) und Führungen (18) für die Zwischenelemente (22) aufweist, die in eine Mittelöffnung des Sockels (12) liegen, die von einem Führungskragen (16) des Sockels umgeben ist und in der ggf. eine Antriebsschraube (27) um die Säulenachse (17) drehbar angetrieben gelagert ist.

## Claims

1. An extendable column (11) having a base (12), a column shaft (13) extendable from said base, a head (14) and a drive unit (27, 33), said column shaft (13) having several flexible belts (20) cambered in the vicinity of the column, **characterized in that** said cambered belts (20) are disposed over the circumference of the column shaft.

2. The column according to claim 1, **characterized in that** said belts (20) are rollable in the vicinity of the base (12), preferably are self-rollable.

3. The column according to claim 1 or 2, **characterized in that** said belts (20) are guided by guides (17) of said base (12) between an external rolled up position and a substantially linear position extending parallel to the column axis (27), wherein they are cambered in a reinforcing manner.

4. The column according to any of the preceding claims, **characterized in that** said belts are cambered spring steel belts.

5. The column according to any of the preceding claims, **characterized in that** in the vicinity of the column shaft (13) intermediate elements (22) are interposed between said belts (20) to interconnect said belts (20) with each other in the edge areas thereof.

6. The column according to claim 5, **characterized in that** said intermediate elements (22) include members to form a chain-type string exhibiting compression strength and preferably also tensile strength, but having flexibility at least in one direction.

7. The column according to claim 6, **characterized in that** said intermediate elements (22) include drive elements (26), like dentoid protrusions, on the members (23) that are driven by a drive gear (27), like a screw or worm arranged concentric to the column, for longitudinal translation in a direction along the column axis (27).

8. The column according to claim 6 or 7, **characterized in that** said members (23) have lateral seats (25) for the outer edges of the belts (20), where the belts (20) engage in the vicinity of the base (12).

9. The column according to any of the claims 5 through 8, **characterized in that** said flexible intermediate elements (22) are outwards deflectable in a guide (18) of the base (12).

10. The column according to any of the claims 6 through 9, **characterized in that** said intermediate elements (22) are connected in a tension resistant manner by ties (29), like flexible wire cables, stretched through apertures (28) in said members (23).

11. The column according to any of the claims 5 through 10, **characterized in that** in the vicinity of said guides (18) for the intermediate elements (22), pressure elements (32) are provided to push said intermediate elements (22) inwards.

12. The column according to any of the claims 5 through 11, **characterized in that** said base (12) has alternating guides (17) for said belts (20) and guides (18) for said intermediate elements (22), disposed in a central hole of the base (12), surrounded by a guiding collar (16) of the base, and in which optionally a drive screw (27) is supported driven in rotation around the column axis (17).

## Revendications

1. Colonne extensible (11) avec un socle (12), une tige de colonne (13) pouvant être sortie hors du socle, une tête (14) et un actionnement (27, 33), sachant que la tige de colonne (13) présente plusieurs bandes (20) flexibles, bombées dans le domaine de la colonne, **caractérisée en ce que** les bandes bombées (20) sont distribuées à la circonférence de la tige de colonne.

2. Colonne d'après la revendication 1, **caractérisée en ce que** les bandes (20) sont susceptibles de s'enrouler et de préférence de s'enrouler automatiquement dans le domaine du socle (12).

3. Colonne d'après la revendication 1 ou 2, **caractérisée en ce que** les bandes (20) sont guidées par des guidages (17) dans le socle (12) d'un état extérieur enroulé dans un état essentiellement linéaire, parallèle à l'axe (27) de la colonne, dans lequel elles sont bombées en se rigidifiant automatiquement.

4. Colonne d'après une des revendications précédentes, **caractérisée en ce que** les bandes sont des feuillards bombés en acier à ressort.

5. Colonne d'après une des revendications précédentes, **caractérisée en ce que** dans le domaine de la tige de colonne (13) sont insérés entre les bandes (20) des éléments intermédiaires (22), qui raccordent les bandes (20) à leur bord extérieur.

6. Colonne d'après la revendication 5, **caractérisée en ce que** les éléments intermédiaires (22) comprennent des éléments, qui forment un brin genre chaîne résistant à la compression et de préférence également à la traction, mais flexible au moins dans une direction.

7. Colonne d'après la revendication 6, **caractérisée en ce que** les éléments intermédiaires (22) présentent sur les éléments (23) des éléments d'actionnement (26), comme des saillies d'une denture, qui sont actionnées par un mécanisme d'actionnement (27), comme une vis ou une vis sans fin concentrique à la colonne, pour effectuer un transport longitudinal en direction de l'axe (27) de la colonne.

8. Colonne d'après la revendication 6 ou 7, **caractérisée en ce que** les éléments (23) présentent des logements (25) latéraux pour les bords extérieurs des bandes (20), dans lesquels les bandes (20) s'engagent dans le domaine du socle (10).

9. Colonne d'après une des revendications de 5 à 8, **caractérisée en ce que** les éléments intermédiaires (22) flexibles sont susceptibles d'être renvoyés à l'extérieur dans un guidage (18) du socle (12).

10. Colonne d'après une des revendications de 6 à 9, **caractérisée en ce que** les éléments intermédiaires (22) sont raccordés à l'épreuve de traction par des élément de traction (29), comme des câbles flexibles en acier, qui sont tendus à travers des ouvertures (28) dans les éléments (28).

11. Colonne d'après une des revendications de 5 à 10, **caractérisée en ce que** dans le domaine des guidages (18) pour les éléments intermédiaires (22), des éléments de pression (32) poussent les éléments intermédiaires vers l'intérieur.

12. Colonne d'après une des revendications de 5 à 11, **caractérisée en ce que** le socle (12) présente à tour de rôle des guidages (17) pour les bandes (20) et des guidages (18) pour les éléments intermédiaires (22), qui sont situés dans une ouverture centrale du socle (12), qui est entourée d'un collier de guidage (16) du socle et dans laquelle est logée éventuellement une vis d'entraînement (27) pouvant être actionnée de manière rotative autour de l'axe de colonne (17).
